**Europäisches Patentamt**

**European Patent Office**

**Office européen des brevets**

(19)

(11) Veröffentlichungsnummer : **0 461 517 B1**

(12) **EUROPÄISCHE PATENTSCHRIFT**

(45) Veröffentlichungstag der Patentschrift :
**25.08.93 Patentblatt 93/34**

(51) Int. Cl.⁵ : **B01J 20/26,** B01J 39/20,
B01J 39/04, C22B 3/00,
C08F 210/02

(21) Anmeldenummer : **91109074.4**

(22) Anmeldetag : **04.06.91**

(54) **Verfahren zur Entfernung oder zur Anreicherung von Schwermetallionen aus wässriger Lösung.**

(30) Priorität : **15.06.90 DE 4019052**
**15.06.90 DE 4019050**

(43) Veröffentlichungstag der Anmeldung :
**18.12.91 Patentblatt 91/51**

(45) Bekanntmachung des Hinweises auf die
Patenterteilung :
**25.08.93 Patentblatt 93/34**

(84) Benannte Vertragsstaaten :
**AT BE DE FR GB IT NL SE**

(56) Entgegenhaltungen :
**EP-A- 0 063 947**
**EP-A- 0 224 029**
**EP-A- 0 227 893**

(56) Entgegenhaltungen :
**EP-A- 0 275 763**
**EP-A- 0 308 960**
**DE-C- 975 524**
**FR-A- 2 259 850**
**GB-A- 1 045 582**
**US-A- 3 565 608**
**US-A- 4 122 248**

(73) Patentinhaber : **BASF Aktiengesellschaft**
**Carl-Bosch-Strasse 38**
**D-67063 Ludwigshafen (DE)**

(72) Erfinder : **Koehler, Gernot, Dr.**
**Calvinstrasse 7 c**
**W-6520 Worms 1 (DE)**
Erfinder : **Klimesch, Roger, Dr.**
**Georg-Froeba-Strasse 43**
**W-6146 Alsbach-Haehnlein (DE)**

## Beschreibung

Die vorliegende Erfindung betrifft ein Verfahren zur Entfernung oder zur Anreicherung von Schwermetallionen aus einer wäßrigen Lösung, indem man ein Ethylen-Copolymerisat mit der wäßrigen Lösung in Kontakt bringt.

Verfahren zur Entfernung von Schwermetallionen aus Wasser sind bekannt. So wird beispielsweise in der DE-C 38 08 088 ein Verfahren zur Abtrennung von Schwermetallionen wie Cadmium, Zinn und Blei aus Industrieabwässern beschrieben, bei dem Aluminium-, Eisen- oder Chromhydroxide dem Abwasser zugegeben und nach mehrstündigem Rühren abfiltriert werden.

Aus der DE-OS 27 55 170 ist ein Uranaddukteinheiten enthaltendes Harz bekannt, das zur Entfernung von Ionen aus wäßrigem oder nichtwäßrigem Medium verwendet wird. Diese Harze wirken als Reduktionsmittel und reduzieren die Metallsalze zu Metallen, die dann ausgefällt werden.

Schließlich ist aus der EP-A 0 340 975 ein Ethylen-Copolymerisat zur Absorption von Metallionen aus Lösungen bekannt, das aus Ethylen und mindestens einem speziellen Aminoalkylacrylat besteht.

Nachteilig bei diesem Verfahren ist, daß der Lösung vor der Trennung noch eine starke Säure zugesetzt werden muß.

Desgleichen sind Verfahren zur Anreicherung von Schwermetallionen aus Wasser bekannt. So wird beispielsweise in der DE-C 27 11 609 ein Verfahren zur Gewinnung von in Meerwasser gelöstem Uran an eine Adsorbermatrix beschrieben, die aus biologisch rezenten Huminsäuren und einem Trägermaterial besteht.

Aus der US-PS 4,604,321 ist ein Quecksilber adsorbierender Stoff bekannt, der aus einem konjugierten Diolefin auf einem Trägermaterial besteht.

In der US-PS 4,601,889 ist ein Verfahren zur Wiedergewinnung von Schwermetallen aus wäßriger Lösung beschrieben, bei dem ein Polymer mit einer speziellen Hydrazidgruppe als Adsorber verwendet wird.

In der EP-OS 0227893 wird ein Verfahren zur Entfernung von Schwermetallen aus Flüssigkeiten beschrieben, bei welchem das dabei verwendete Ethylenpolymerisat in spezieller Weise aufbereitet wird und mikroporös sein muß.

Die Herstellung der für diese Polymeren benötigten Monomeren ist aber sehr aufwendig.

Aufgabe der vorliegenden Erfindung war es einerseits, ein Verfahren zur Entfernung von Schwermetallionen aus Wasser zu finden, das keine Zugabe von Hilfsstoffen zu der wäßrigen Lösung erforderlich macht und die Schwermetallionen in kurzer Zeit selektiv abtrennt und die Rückgewinnung der Schwermetallionen ermöglicht.

Andererseits war es Aufgabe der vorliegenden Erfindung, ein Verfahren zur Anreicherung von Schwermetallionen aus Wasser zu finden, das die Schwermetallionen in kurzer Zeit selektiv abtrennt, die Rückgewinnung der Schwermetallionen ermöglicht und für das Adsorber verwendet werden, die leicht zugänglich und einfach zu handhaben und kostengünstig herzustellen sind.

Diese Aufgaben wurden durch das eingangs definierte Verfahren gelöst, wobei ein Copolymerisat aus Ethylen, (Meth)Acrylsäure und einem (Meth)Acrylsäureester verwendet wird, dessen Carbonsäuregruppen bis zu 100 % mit Metallionen neutralisiert sein können, welches dadurch gekennzeichnet ist, daß das Ethylen-Copolymerisat in Form von Granulat oder als Folie vorliegt.

Zu den Verfahrensstufen und Aufbaukomponenten ist im einzelnen folgendes auszuführen:

Die für dieses Verfahren geeigneten Copolymerisate des Ethylens mit (Meth)Acrylsäure und (Meth)Acrylsäureester sind bekannt und beispielsweise in der GB-A-2 091 745, US-A-3 520 861, US-A-3 264 272, GB-A-1 011 981, US-A-3 404 134, US-A-3 969 434 und DE-3 539 469 beschrieben. Sie können bis zu 100 % mit Metallionen wie beispielsweise Natrium-, Kalium-, Calcium- oder Magnesium-Ionen neutralisiert sein, wobei die sogenannten Ionomeren gebildet werden, die beispielsweise in der US-A-3 264 272, EP-A-223 182, EP-A-193 110, US-A 3 006 029 und EP-A-349 826 beschrieben sind.

Für das vorliegende Verfahren sind Ethylen-Copolymerisate geeignet, die zu 40 bis 87 Gew.-%, bevorzugt 40 bis 75 Gew.-%, bezogen auf das Copolymerisat, aus Ethylen bestehen.

Die (Meth)Acrylsäure wird zu 6 bis 25 Gew.-%, bevorzugt 8 bis 20 Gew.-%, bezogen auf das Copolymerisat, verwendet.

Als Ester der Acrylsäure oder Methacrylsäure eignen sich solche mit 1 bis 12 Kohlenstoffatome enthaltenden geradkettigen oder verzweigten Monoalkoholen, z.B. Methylacrylat, Ethylacrylat, Isopropylacrylat, Methylmethacrylat, N-Butylacrylat, N-Butylmethacrylat, Isobutylacrylat, Isobutylmethacrylat, tert.-Butylacrylat, 2-Ethylhexylacrylat, 2-Ethylhexylmethacrylat, Laurylacrylat sowie deren Gemische. Bevorzugt sind N-Butylacrylat, 2-Ethylhexylacrylat und Laurylacrylat.

Diese (Meth)Acrylsäureester werden zu 2 bis 30 Gew.-%, bevorzugt 5 bis 20 Gew.-%, bezogen auf das Copolymerisat, verwendet.

Als Ester der Acrylsäure oder Methacrylsäure können aber auch solche mitverwendet werden, deren Alkoholrest ein Alkylpolyglykol vom Molekulargewicht 320 bis 1100 ist. Die Alkylpolyglykole sind aus Ethylenglykol-, Propylenglykol- oder Ethylenglykol/Propylenglykol-Einheiten aufgebaut. Bevorzugt werden Alkylpolyethylenglykole mit 5 bis 25, bevorzugt 8 bis 15 Ethylenglykol-Einheiten verwendet.

Geeignete Beispiele sind methylpolyethylenglycol(400)acrylat, Methylpolyethylenglykol(460)acrylat und Methylpolyethylenglykol(660)acrylat.

Die Alkylpolyglykol(meth)acrylate können von 0 bis 30 Gew.-%, bezogen auf das Copolymerisat, mitverwendet werden. Bei Ihrer Mitverwendung haben sich 5 bis 20 Gew.-% bewährt.

Das Ethylencopolymerisat hat einen Schmelzindex nach DIN 53 735 (190°C; 2,16 kp Belastung) im Bereich von 50 bis 500 g/10 min, bevorzugt von 75 bis 260 g/10 min. Das Polymer kann beispielsweise als Granulat, z.B. Füllung einer Säule, als gegossener Film oder als extrudierte Folie verwendet werden.

Das Verfahren kann beispielsweise als Chromatographie-Verfahren, Membran-Verfahren, durch Zugabe des Ethylen-Copolymerisats zu den wäßrigen Lösungen oder mit Hilfe anderer aus dem Stand der Technik bekannter Ausführungsformen durchgeführt werden.

Wird das Verfahren zur Entfernung von Schwermetallionen aus einer wäßrigen Lösung ausgeübt, ist es von Vorteil, das Chromatographie-Verfahren anzuwenden. Hierzu wird eine Chromatographiersäule mit Granulat des Copolymerisates gefüllt und die wäßrige Lösung der Schwermetallionen kontinuierlich durch die Säule strömen lassen. Zu gewünschten zeitlichen Abständen wird die Konzentration der Metallionen im Eluat bestimmt. Wenn die Säule mit Metallionen gesättigt ist, kann sie regeneriert oder ausgetauscht werden.

Wird das Verfahren zur Anreicherung von Schwermetallionen aus einer großen Menge wäßriger Lösung wie beispielsweise Meerwasser durchgeführt, hat sich die Zugabe des Ethylen-Copolymerisates in die die Schwermetallionen enthaltende wäßrige Lösung bewährt. Hierzu wird das Ethylen-Copolymerisat in Form von Granulat, als gegossener Film oder als geblasene Folie in die wäßrige Lösung mit den Schwermetallionen gegeben und nach einer bestimmten Verweilzeit wieder entnommen.

Die Regenerierung des Ethylen-Copolymerisats oder die Desorption der Schwermetallionen vom Ethylen-Copolymerisat erfolgt auf übliche Weise durch Inkontaktbringen mit einem Eluent. Geeignete Eluente sind beispielsweise wäßrige Lösungen von Metallsalzen wie Natriumchlorid, Kaliumchlorid oder Calciumchlorid oder verdünnte Mineralsäuren wie verdünnte Salzsäure oder Schwefelsäure.

Wurde als Copolymerisat eines mit teilweise bis vollständig neutralisierten. Carbonsäuregruppen verwendet, so werden die zur Neutralisation verwendeten Metallionen durch die Schwermetallionen ausgetauscht. Die ausgetauschten Metallionen werden eluiert und befinden sich im Eluat. Dieses Verfahren kann von Vorteil sein, wenn das behandelte Wasser anschließend wieder im Prozess verwendet wird und deshalb neutral sein muß.

Das Verfahren hat sich für folgende Schwermetallionen bewährt: Quecksilber-, Uran-, Silber- und Zink-Ionen.

Bevorzugt wird es zur Abtrennung von Quecksilber- und Uran-Ionen angewendet.

Durch das Verfahren werden die Schwermetallionen in kurzer Zeit selektiv aus der wäßrigen Lösung abgetrennt und auf dem Ethylen-Copolymerisat angereichert. Die Anwendung des Verfahrens liegt im Bereich der Metallgewinnung aus Meerwasser und Industrieabwässern.

Beispiel 1

In eine Chromatographiersäule wurden 50,0 g eines Ethylen-Copolymerisates aus 50 Gew.-% Ethylen, 19 Gew.-% Acrylsäure, 21 Gew.-% Ethylhexylacrylat und 10 Gew.-% eines Methylpolyglykolacrylats mit etwa 10 Ethylenglykol-Einheiten eingefüllt. Durch diese Säule wurde eine 5 mg Quecksilber-Ionen/l enthaltende wäßrige Lösung mit einem Durchfluß von 1 l/h durchgeleitet. In der Ausgangslösung und den nach Durchlaufen der Säule erhaltenen Lösungen wurden jeweils die Quecksilberkonzentrationen bestimmt.

| Probe: | 1 | 2 | 3 | 4 | 5 | 6 | 7 | 8 |
|---|---|---|---|---|---|---|---|---|
| Zeit (min): | 15 | 30 | 45 | 60 | 75 | 90 | 105 | 115 |
| Durchfluß (ml): | 240 | 500 | 735 | 980 | 1250 | 1520 | 1760 | 1950 |

| Probe | Konzentration | |
| --- | --- | --- |
| | mg Hg/l | Molarität |
| 0 | 5 | $2.5 \cdot 10^{-5}$ |
| 1 | 0.3 | $1.5 \cdot 10^{-6}$ |
| 2 | 0.2 | $1.0 \cdot 10^{-6}$ |
| 3 | 0.2 | $1.0 \cdot 10^{-6}$ |
| 4 | 0.3 | $1.5 \cdot 10^{-6}$ |
| 5 | 0.3 | $1.5 \cdot 10^{-6}$ |
| 6 | 0.3 | $1.5 \cdot 10^{-6}$ |
| 7 | 0.3 | $1.5 \cdot 10^{-6}$ |
| 8 | 0.3 | $1.5 \cdot 10^{-6}$ |

Beispiel 2

Es wurden 50 g des in Beispiel 1 beschriebenen Copolymers in eine Chromatographiersäule eingefüllt. Durch diese Säule wurde ein 6 mg Uranyl-Ionen/l enthaltende wäßrige Lösung mit einem Durchfluß von 1 l/h durchgeleitet. In der Ausgangslösung und in den nach Durchlaufen der Säule erhaltenen Lösungen wurde jeweils die Uranyl-Konzentration bestimmt.

| Probe: | 1 | 2 | 3 | 4 | 5 | 6 | 7 | 8 |
| --- | --- | --- | --- | --- | --- | --- | --- | --- |
| Zeit (min): | 15 | 30 | 45 | 60 | 75 | 90 | 105 | 115 |
| Durchfluß (ml): | 240 | 490 | 725 | 1100 | 1250 | 1600 | 1820 | 2050 |

| Probe | Konzentration | |
| --- | --- | --- |
| | mg $UO_2$/l | Molarität |
| 0 | 6.0 | $2.2 \cdot 10^{-5}$ |
| 1 | 0.1 | $3.7 \cdot 10^{-7}$ |
| 2 | 0.2 | $7.4 \cdot 10^{-7}$ |
| 3 | 0.2 | $7.4 \cdot 10^{-7}$ |
| 4 | 0.1 | $3.7 \cdot 10^{-7}$ |
| 5 | 0.1 | $3.7 \cdot 10^{-7}$ |
| 6 | 0.2 | $7.4 \cdot 10^{-7}$ |
| 7 | 0.2 | $7.4 \cdot 10^{-7}$ |
| 8 | 0.2 | $7.4 \cdot 10^{-7}$ |

Beispiele 3-6

7,5 g des Ethylen-Copolymerisats des Beispiels 1 wurden in 75 ml Tetrahydrofuran gelöst. Diese Lösung wurde auf eine ebene Fläche ausgegossen, das Lösemittel bei Raumtemperatur verdampft und der so erhaltene Film für die weiteren Untersuchungen verwendet.

Der auf diese Weise erhaltene Film wurde bei Beispiel 3 in eine flache Schale mit 300 ml einer 20,0 mg enthaltenden Uranylacetat-Lösung gegeben. Der Urangehalt der Lösung wurde zu Beginn des Versuchs, nach 48 h und nach 192 h bestimmt, der Urangehalt des Polymeren nach 192 h.

4

In den Beispielen 4 bis 6 wurden Zinkchlorid, Silbernitrat und Quecksilbernitrat verwendet. Die Ergebnisse sind der Tabelle zu entnehmen.

Tabelle

Metallionen-Aufnahme im Ethylen-Copolymerisat

| Beisp. | Metallsalz | Konzentration der wäßrigen Lösung | | | Metallionen-Anreiche-rung im Copolymerisat [mg/kg] | Metallionen-Entfer-nung aus der Lösung [%] |
|---|---|---|---|---|---|---|
| | | Ausgangslösung [mg/300ml] | nach 48 h | nach 192 h | | |
| 3 | Uranylacetat | 20,0 | 8,00 | 3,33 | 700,0 | 87,5 |
| 4 | $ZnCl_2$ | 0,44 | 0,35 | 0,33 | 2,0 | 11,4 |
| 5 | $AgNO_3$ | 1,10 | 0,90 | 0,56 | 7,0 | 15,9 |
| 6 | $Hg(NO_3)_2$ | 0,80 | 0,07 | 0,06 | 18,0 | 56,3 |

**Patentansprüche**

1. Verfahren zur Entfernung oder zur Anreicherung von Schwermetallionen aus einer wäßrigen Lösung, indem man ein Ethylen-Copolymerisat mit der wäßrigen Lösung in Kontakt bringt, wobei man ein Copolymerisat aus Ethylen, (Meth)Acrylsäure und einem (Meth)Acrylsäureester verwendet, dessen Carbonsäuregruppen bis zu 100 % mit Metallionen neutralisiert sein können, dadurch gekennzeichnet, daß das Ethylen-Copolymerisat in Form von Granulat oder als Folie vorliegt.

2. Verfahren nach Anspruch 1, dadurch gekennzeichnet, daß man ein Ethylen-Copolymerisat verwendet aus
   40 bis 87 Gew.-% Ethylen
   6 bis 25 Gew.-% (Meth)Acrylsäure
   2 bis 30 Gew.-% (Meth)Acrylsäureester
   5 bis 25 Gew.-% Alkylpolyglykol(meth)acrylat,
   wobei sich die Komponenten zu 100 Gew.-% ergänzen.

3. Verfahren nach Anspruch 1 oder 2, dadurch gekennzeichnet, daß die Carboxylgruppen des Copolymerisates bis zu 100 % mit Natrium-, Kalium-, Magnesium- oder Calcium-Ionen neutralisiert sind.

4. Verfahren nach einem der Ansprüche 1 bis 3, dadurch gekennzeichnet, daß man die Entfernung von Schwermetallionen mittels einer Chromatographiersäule durchführt, die mit dem Ethylen-Copolymerisat in Form eines Granulates gefüllt ist.

5. Verfahren nach einem der Ansprüche 1 bis 4, dadurch gekennzeichnet, daß man die Anreicherung von Schwermetallionen mittels einer Folie aus dem Ethylen-Copolymerisat durchführt, die mit der wäßrigen Lösung der Schwermetallionen in Kontakt gebracht wird.

**Claims**

1. A process for removing or for enriching heavy metal ions from an aqueous solution by contacting the aqueous solution with an ethylene copolymer, using a copolymer of ethylene, (meth)acrylic acid and a (meth)acrylic ester, whose carboxylic acid groups can be up to 100% neutralized with metal ions, wherein the ethylene copolymer is in the form of granules or as sheet.

2. A process as claimed in claim 1, wherein an ethylene copolymer composed of
   40 - 87% by weight of ethylene
   6 - 25% by weight of (meth)acrylic acid
   2 - 30% by weight of (meth)acrylic ester
   5 - 25% by weight of alkyl polyglycol (meth)acrylate,
   where the components total 100% by weight, is used.

3. A process as claimed in claim 1 or 2, wherein the carboxyl groups of the copolymer are up to 100% neutralized with sodium, potassium, magnesium or calcium ions.

4. A process as claimed in any of claims 1 to 3, wherein the removal of heavy metal ions is carried out using a chromatography column which is packed with the ethylene copolymer in the form of granules.

5. A process as claimed in any of claims 1 to 4, wherein the enrichment of heavy metal ions is carried out using a sheet which is composed of the ethylene copolymer and which is contacted with the aqueous solution of the heavy metal ions.

**Revendications**

1. Procédé pour l'élimination ou pour l'enrichissement d'ions de métaux lourds d'une solution aqueuse/conformément auquel on met un copolymère de l'éthylène en contact avec la solution aqueuse, où l'on utilise un copolymère de l'éthylène, de l'acide (méth)acrylique et d'un ester de l'acide (méth)acrylique, dont les radicaux acide carboxylique peuvent être neutralisés jusqu'à 100% avec des ions de métaux, caractérisé en ce que le copolymère de l'éthylène se présente sous la forme d'un granulé ou sous la forme d'une feuille.

2.  Procédé suivant la revendication 1, caractérisé en ce que l'on utilise un copolymère de l'éthylène, constitué de
    40 à 87% en poids d'éthylène,
    6 à 25% en poids d'acide (méth)acrylique,
    2 à 30% en poids d'ester de l'acide (méth)acrylique,
    5 à 25% en poids de (méth)acrylate d'alkylpolyglycol,
    où les composants se complètent pour faire 100% en poids.

3.  Procédé suivant la revendication 1 ou 2, caractérisé en ce que les radicaux carboxyle du copolymère sont neutralisés jusqu'à 100% avec des ions sodium, potassium, magnésium ou calcium.

4.  Procédé suivant l'une quelconque des revendications 1 à 3, caractérisé en ce que l'on entreprend l'élimination des ions de métaux lourds à l'aide d'une colonne de chromatographie, qui est remplie du copolymère de l'éthylène sous forme d'un granulé.

5.  Procédé suivant l'une quelconque des revendications 1 à 4, caractérisé en ce que l'on entreprend l'enrichissement en ions de métaux lourds à l'aide d'une feuille du copolymère de l'éthylène, que l'on met en contact avec la solution aqueuse des ions de métaux lourds.